# EUROPEAN PATENT SPECIFICATION

(11) **EP 4 386 208 B1**
(45) Date of publication and mention of the grant of the patent: **17.06.2026**
(21) Application number: 22855895.3
(22) Date of filing: 10.08.2022
(51) Int. Cl.: F04B 39/00, F16J 9/28, C08K 7/06, C08L 27/18, C08L 67/00, C08L 71/10, C08L 79/08, C08K 3/04

(54) **PISTON RING**
KOLBENRING
SEGMENT DE PISTON

(30) Priority: 11.08.2021 JP 2021131226; 11.08.2021 JP 2021131227; 19.08.2021 JP 2021134449
(43) Date of publication of application: 19.06.2024
(73) Proprietor: NTN Corporation, Osaka-shi, Osaka 530-0005 (JP)
(72) Inventor: YASUDA, Ken, Inabe-gun, Mie 511-0243 (JP)
(74) Representative: Henkel & Partner mbB
(86) International application number: PCT/JP2022/030517
(87) International publication number: WO 2023/017833

(56) References cited:
- EP-A1- 2 833 009
- WO-A1-2019/208182
- WO-A1-2019/208182
- WO-A1-2020/149274
- WO-A2-2022/056007
- JP-A- 2002 081 551
- JP-A- 2002 081 551
- JP-A- 2007 192 242
- JP-A- 2007 192 242
- JP-A- 2009 270 437
- JP-A- 2009 270 437
- JP-A- H08 109 882
- JP-A- H1 061 777
- JP-A- H1 061 777

## Description

### TECHNICAL FIELD

The present invention relates to a piston ring of a hydrogen gas reciprocating compressor used in a hydrogen station.

### BACKGROUND ART

Generally, a reciprocating compressor has a structure including a piston and a cylinder. The reciprocating compressor is used for compressing fluid by reciprocating the piston relative to the cylinder. In such a reciprocating compressor, in order to seal a gap between the piston and the cylinder not to allow the liquid to leak, an annular piston ring is generally employed. The piston ring is mounted to an annular groove formed on the piston. In this case, an outer peripheral surface of the piston ring is in contact with an inner peripheral surface of the cylinder and a side surface of the piston ring is in contact with a side surface of the annular groove, so that the fluid is sealed.

In recent years, the reciprocating compressor is also used as a hydrogen gas reciprocating compressor used in a hydrogen station. When filling hydrogen gas compressed by such a hydrogen gas reciprocating compressor into a fuel cell vehicle, a sulfur component introduced in the compression gas might cause deterioration of performance of a fuel cell. Thus, low content of the sulfur atom is required to the piston ring.

For example, JP 6533631 B discloses a hydrogen gas reciprocating compressor. JP 6533631 B discloses a ring-like resin sliding member that is disposed in one of a piston member and a cylinder liner and is configured to slide relative to the other one (a slid member) of the piston member and the cylinder liner. JP 6533631 B discloses that non-crystalline carbon film is formed on both sliding surfaces of the sliding member and the slid member, so that a replacement lifetime due to the wear of the sliding member can be extended. In the non-crystalline carbon film, the content of carbon in the surface portion is larger than the content of carbon in the inside portion. It is preferable that the non-crystalline carbon film does not contain sulfur. Further, it is preferable that the sliding member is, for example, a desulfurized member that is desulfurized by being exposed to a hydrogen atmosphere before installing the sliding member into the compressor.
JP 2007-192242 A discloses a piston ring made by melt-molding a thermoplastic polyimide resin composition. The composition comprises a thermoplastic polyimide resin (50-99 parts by weight) and carbon fiber (1-50 parts by weight). To this, a lubricant is added, which is at least one selected from fluororesin, graphite, oil, and molybdenum disulfide. The objective is to provide a piston ring with excellent heat resistance, friction and wear characteristics, and sealing properties, while also possessing the inherent chemical resistance, durability, and superior mechanical properties of polyimide resin.
JP H10 61 777 A discloses a synthetic resin seal ring for high-pressure fluid sealing. The seal ring is made from a resin composition containing 60-85% by weight of a heat-resistant resin, such as an aromatic polyether ketone resin (e.g., PEEK), and 15-40% by weight of an additive, which can be a fibrous reinforcing material like carbon fiber. A lubricity-imparting agent may also be added. The invention aims to provide a seal ring with excellent sealing properties, good friction and wear characteristics, and good assemblability, even when used under high oil pressure.
WO 2019/208182 A1 discloses a piston ring for a compressor, which seals the gap between a piston and a cylinder. The piston ring comprises a first ring portion and a second ring portion, which are fitted on the outer circumferential portion of the piston and arranged side-by-side in the axial direction. The second ring portion is positioned on the side opposite a compression chamber relative to the first ring portion. A key feature is that the second ring portion has a greater hardness than the first ring portion, thereby preventing the first ring portion from deforming under high pressure.
JP 2002-81551 A discloses a seal ring with minute lubrication grooves on its side seal surfaces to improve wear resistance. The grooves penetrate from the inner to the outer periphery of the ring and are sized so as not to impair the sealing function. This structure allows the sealed liquid to leak through the grooves, forming a lubricating film over the entire seal surface, thereby improving wear resistance. The invention also describes a specific butt-joint structure with interlocking protrusions and recesses to enhance sealing performance.
JP 2009-270437 A discloses a piston for a compressor, which includes a resin-based piston ring installed in a piston ring groove. To improve sealing performance and reduce lubricating oil discharge, the corner of the piston ring groove on the side opposite the piston top surface is provided with a rounding or a chamfer. The piston ring itself is provided with a corresponding curved surface that can abut this rounded or chamfered corner. This configuration allows the piston ring to tilt during the compression stroke, increasing the sealing pressure at specific contact points.
WO 2020/149274 A1 discloses a gas compressor and its manufacturing method, wherein a sliding member, such as a piston ring, is made of resin. A non-crystalline carbon film (amorphous carbon film) is formed on the sliding surfaces of both the sliding member and the receiving member (e.g., cylinder liner). A key aspect is that the carbon content in the surface portion of the film is higher than in its inner portion. This structure provides a high-purity compressed gas and extends the service life of the sliding components by improving wear resistance.
EP 2 833 009 A1 discloses a composite plain bearing comprising an ingot metal plate and a thin resin layer (0.1 to 0.7 mm thick). The resin layer is composed of a resin composition with an aromatic polyether ketone (PEK) resin as its base and is integrally provided on the surface of the ingot metal plate by injection molding. The face of the ingot metal plate joined to the resin layer is chemically surface-treated. The objective is to provide a composite plain bearing with excellent heat resistance, creep resistance, low friction, and abrasion resistance, which can be manufactured with high productivity.
WO 2022/056007 A2 discloses functionally graded composite structures, such as a composite ring or bearing. The structure includes at least a first region of a first polymeric material and a second region of a second polymeric material. A key feature is an interfacial region that defines a compositional gradient between the first and second regions. This allows for a gradual transition of properties, such as wear resistance, stiffness, or thermal conductivity, across the component. For example, a wear-resistant composition can be used for an outer layer while a structurally robust composition is used for an inner layer.

### SUMMERY OF THE INVENTIONPROBLEMS TO BE SOLVED BY THE INVENTION

As mentioned above JP 6533631 B discloses an example of a treatment that exposes the sliding member to a hydrogen atmosphere as a desulfurizing treatment. However, the desulfurizing treatment exposes the sliding member to not the atmosphere but a special atmosphere. Thus, a special exposing device is necessary, and a safety measure against fire or explosion caused when handling hydrogen is also necessary, which leads to high cost.

An object of the present invention is, in order to solve such problems, to provide a piston ring that has low content of a sulfur atom, eliminates the need for a special exposing device and a strict safety measure, and is low in cost.

### MEANS FOR SOLVING THE PROBLEMS

A piston ring according to the present invention is defined in claim 1. The dependent claims are directed to different advantageous aspects of the invention.
A piston ring may be formed of a resin composition containing at least polyetheretherketone (PEEK) resin as a main component. The resin composition contains carbon material in which the content of a sulfur atom is 200 ppm or less. The carbon material is at least one of carbon fiber, graphite, and coke powder. The resin composition contains total 5-35 vol% of the carbon material relative to the whole of the resin composition. In the present invention, the "gas" includes general gas and also gaseous fuel, etc.

The resin composition may contain 5-25 vol% of polytetrafluoroethylene (PTFE) resin relative to the whole of the resin composition.

The carbon material may include at least the carbon fiber, and the average fiber length of the carbon fiber may be 20-200 µm.

The content of the sulfur atom in the piston ring may be 250 ppm or less.

The resin composition may contain the PEEK resin as a main component, and the piston ring may have an endothermic peak due to heat hysteresis in a range of 150-330 °C in a temperature increasing process of the differential scanning calorimetry.

A reciprocating compressor may be configured as a hydrogen gas reciprocating compressor that compresses hydrogen gas.

A piston ring may be used in a reciprocating compressor that compresses gas. The piston ring may be formed of a resin composition containing thermoplastic polyimide resin as a main component. The content of a sulfur atom in the piston ring is less than 5 ppm.

The content of the sulfur atom in the piston ring may be measured by a triple quadrupole inductively coupled plasma mass spectrometry.

The resin composition may not contain carbon material and sulfide.

The resin composition may contain at least one of PTFE resin and aromatic polyester resin.

The resin composition may contain the PTFE resin and the aromatic polyester resin, and the total compound rate of the PTFE resin and the aromatic polyester resin may be 5-50 vol% relative to the whole of the resin composition.

A piston ring may be used in a reciprocating compressor that compresses gas. The piston ring may be formed of a resin composition containing PEEK resin as a main component. The piston ring has an endothermic peak due to heat hysteresis in a range of 150-330 °C in a temperature increasing process of the differential scanning calorimetry.

The content of the sulfur atom in the piston ring may be 250 ppm or less.

The resin composition may contain 5-25 vol% of carbon fiber and 5-25 vol% of a solid lubricant relative to the whole of the resin composition, and the solid lubricant may be at least one of PTFE resin and graphite.

The melt viscosity of the PEEK resin at the shear rate of 1,000/s and the temperature of 400 °C may be 200-550 Pa·s based on a measuring method defined in ISO 11443.

The reciprocating compressor may be configured as a hydrogen gas reciprocating compressor that compresses hydrogen gas.

The resin composition may not contain polyphenylene sulfide (PPS) resin.

A manufacturing method of a piston ring, wherein the piston ring is used in a reciprocating compressor that compresses gas and is formed of a resin composition containing PEEK resin as a main component, may include a heat treatment process in which a molded body of the resin composition is subjected to a heat treatment at a maximum temperature of 150-330 °C. In the present invention, the molded body to be subjected to the heat treatment may include a molded material and a machined product of the molded material.

The content of the sulfur atom in the molded body after the heat treatment may be lower than the content of the sulfur atom in the molded body before the heat treatment.

The molded body may be formed through a molding process that injection-molds the resin composition. In the molding process, the maximum temperature in a nozzle or a cylinder of an injection molding device may be 380 °C or more at the measured temperature of the resin.

A raw material of the molded body may be a pellet formed of the resin composition. The pellet may be formed using a melt extruder. The maximum temperature in a nozzle or a cylinder of the melt extruder may be 380 °C or more at the measured temperature of the resin.

The content of the sulfur atom in the piston ring may be 250 ppm or less.

The reciprocating compressor may be configured as a hydrogen gas reciprocating compressor that compresses hydrogen gas.

### EFFECT OF THE INVENTION

One aspect of the piston ring according to the present invention is formed of the resin composition containing at least the PEEK resin as a main component. The resin composition contains a specified amount of the carbon material (at least one of the carbon fiber, the graphite, and the coke powder) in which the content of the sulfur atom is 200 ppm or less. Thus, the wear resistance of the piston ring can be improved, and the sulfur component can be suppressed from being introduced into the compression gas when the piston ring is used in the hydrogen gas reciprocating compressor. Consequently, the deterioration of the performance of the fuel cell can be suppressed. Further, low content of the sulfur atom eliminates the need for a special desulfurizing treatment using an exposing device that exposes the piston ring to a hydrogen atmosphere, and also eliminates the need for a strict safe measure , so that low cost can be realized.

The resin composition contains, in addition to the specified amount of the carbon fiber, 5-25 vol% of the PTFE resin relative to the whole of the resin composition. Thus, the piston ring has superior wear resistance even in a compressor without lubricant such as oil. Accordingly, the piston ring can be provided that is suitable to, in particular, a hydrogen gas reciprocating compressor to which the wear resistance is required at high temperature and high pressure in a non-lubricating condition. Further, since the piston ring according to the present invention has superior wear resistance, the piston ring can be used also in a reciprocating compressor for hydrogen stations in which the pressure of the compression gas is, for example, 82 MPa or more.

Further, in another aspect a piston ring, not covered by the invention, may be formed of the resin composition containing the thermoplastic polyimide resin or the polyamideimide resin as a main component, and in particular the resin composition that does not contain the carbon material and the sulfide each containing the sulfur as an impurity, is employed as a material of the piston ring. Thus, the content of the sulfur atom in the piston ring can be set to less than 5 ppm without a special desulfurizing treatment such as an exposing treatment that exposes the piston ring to a hydrogen atmosphere. In a case in which the piston ring is used in a hydrogen gas reciprocating compressor used in a hydrogen station, a gasified sulfur component is suppressed from being introduced into the compression gas, and thus the deterioration of the performance of the fuel cell due to the sulfur component can be suppressed.

Further, the total compound rate of the PTFE resin and the aromatic polyester resin is 5-50 vol% relative to the whole of the resin composition. Thus, the piston ring has superior wear resistance even in a compressor without lubricant such as oil. Accordingly, the piston ring is suitable to, in particular, a hydrogen gas reciprocating compressor to which the wear resistance is required at high temperature and high pressure in a non-lubricating condition.

Further, the piston ring according to the present invention is formed of the resin composition containing the PEEK resin as a main component. The resin composition has an endothermic peak due to heat hysteresis in a range of 150-330 °C in a temperature increasing process of the differential scanning calorimetry. The endothermic peak is based on that the molded body of the resin composition is subjected to the heat treatment at a specified temperature in manufacturing the piston ring. Accordingly, the content of the sulfur atom in the piston ring can be decreased. As a result, a generation amount of outgas that contains the sulfur atom (sulfur containing gas) generated in hydrogen atmosphere can be decreased, and thus the piston ring is favorably applied to, in particular, a hydrogen gas reciprocating compressor. Further, in a case in which the heat treatment is executed in atmosphere, the heat treatment in special atmosphere such as a treatment of exposure to the hydrogen atmosphere (a desulfurizing treatment) as disclosed in, for example, Patent Document 1, is not necessary, so that cost can be decreased.

The resin composition contains 5-25 vol% of the carbon fiber and 5-25 vol% of the solid lubricant (at least one of the PTFE resin and the graphite) relative to the whole of the resin composition. Thus, the piston ring has superior friction and wear performance. Accordingly, the piston ring can be favorably used even in a reciprocating compressor in a non-lubricating condition such as a condition without oil.

Further, the melt viscosity of the PEEK resin at the shear rate of 1,000/s and the temperature of 400 °C is 200-550 Pa·s based on the measuring method defined in ISO 11443. Thus, the piston ring has further superior wear resistance under a condition of reciprocating sliding and the wear damage of the mating material can be decreased.

In the hydrogen gas reciprocating compressor, a sulfur component in the piston ring might be gasified in the compression process and introduced into the compression gas (hydrogen gas). When such compression gas is filled into the fuel cell vehicle, the compression gas might affect a fuel cell. However, since the resin composition does not contain the PPS resin, the sulfur component derived from the PPS resin can be prevented from being introduced into the compression gas.

One aspect of the manufacturing method of the piston ring according to the present invention, wherein the piston ring is used in a reciprocating compressor that compresses gas and is formed of the resin composition containing the PEEK resin as a main component, includes the heat treatment process in which the molded body of the resin composition is subjected to the heat treatment at the maximum temperature of 150-330 °C. Thus, the content of the sulfur atom in the molded body after the heat treatment can be lower than the content of the sulfur atom in the molded body before the heat treatment. As a result, a generation amount of the sulfur containing gas generated in hydrogen atmosphere at high temperature can be decreased, and thus the piston ring is favorably applied to, in particular, a hydrogen gas reciprocating compressor. Further, the heat treatment process does not require a heat treatment in special atmosphere such as a treatment of exposure to the hydrogen atmosphere (a desulfurizing treatment) as disclosed in Patent Document 1, and thus the heat treatment process eliminates the need for a special exposing device and a strict safe measure, so that cost can be decreased.

Since diphenyl sulfone, which is a sulfur compound, is used as a solvent for polymerization of the PEEK resin, diphenyl sulfone remains as an impurity in the PEEK resin. In the above-described aspect of the manufacturing method of the piston ring according to the present invention, focusing on that the boiling point of diphenyl sulfone is 379 °C, by setting the maximum temperature in the nozzle or the cylinder in the injection molding device to 380 °C or more at a measured temperature of the resin in the molding process that injection-molds the resin composition, diphenyl sulfone is easily eliminated. Further, in addition or in the alternative to the molding process, when the molding pellet, which is a raw material of the molded body, is produced by the melt extruder, the maximum temperature in the nozzle or the cylinder in the melt extruder is set to 380 °C or more at a measured temperature of the resin so as to easily eliminate diphenyl sulfone. In this manner, the temperature setting of the injection molding device or the melt extruder can further easily decrease the sulfur atom in the piston ring at low cost.

### BRIEF DESCRIPTION OF THE DRAWINGS

- Fig. 1 is a perspective view of an example of a piston ring according to the present invention.
- Fig. 2 is a sectional view of an example of a reciprocating compressor including the piston ring according to the present invention.
- Fig. 3 is a schematic view of an injection molding device used in a molding process.
- Fig. 4 is a general view of a pin-on-disk tester.
- Fig. 5 is a graph showing a relation between a melt viscosity and a specific wear rate of PEEK resin.
- Fig. 6 is a graph showing a result of the differential scanning calorimetry.

### MODE FOR CARRYING OUT THE INVENTION

The present inventors conducted a study for providing a piston ring having low content of a sulfur atom and superior wear resistance. As a result, the present inventors found that a resin composition that contains at least PEEK resin as a main component and 5-35 vol% of a specified carbon material of which the content of the sulfur atom is 200 ppm or less, relative to the whole of the resin composition, is suitable as the material of the piston ring Further, the present inventors conducted a study for decreasing the content of sulfur in a piston ring formed of a resin composition that contains PEEK resin as a main component. As a result, the present inventors found that the content of a sulfur atom in a molded body of the resin composition after a heat treatment that heat-treats the molded body at the maximum temperature of 150-330 °C becomes lower than the content of the sulfur atom in the molded body before the heat treatment. The present inventions are derived from such knowledge.

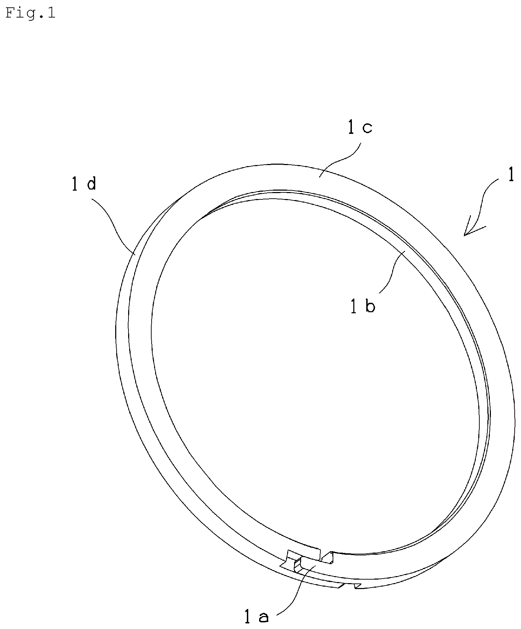

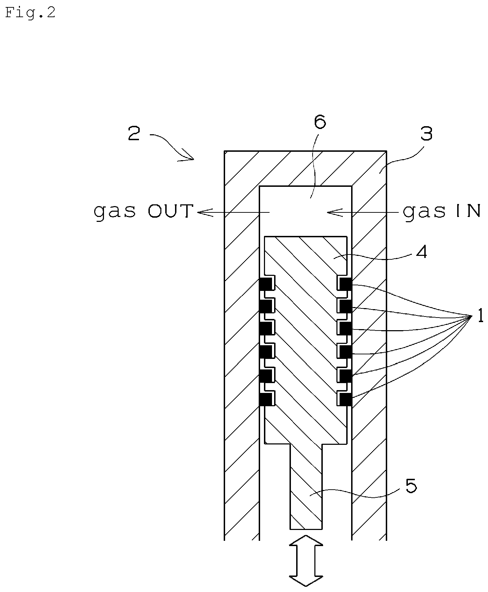

Examples of a piston ring according to the present invention and a reciprocating compressor to which the piston ring is applied are described with reference to Figs. 1 and 2 . Fig. 1 is a perspective view of an example of the piston ring according to the present invention. As shown in Fig. 1 , a piston ring 1 is an annular body having a generally rectangular section. Each of corner portions between a ring inner peripheral surface 1 b and ring side surfaces 1c may be chamfered in a linear or curved manner, or alternatively, in a case in which a seal ring is formed by injection molding, a stepped part serving an ejecting portion from a molding die may be formed on the corner portion.

The piston ring 1 is a cut-type ring having one abutment 1a and is configured to be radially enlarged using its elastic deformation so as to be mounted to an annular groove of a piston. Since the piston ring 1 has the abutment 1a, the piston ring 1 is radially enlarged due to pressure of gas when in use, so that an outer peripheral surface 1d of the piston ring 1 adheres to an inner peripheral surface of the cylinder. The shape of the abutment 1a may be, but not limited thereto, a straight cut or an angle cut, however a complex stepped cut as shown in Fig. 1 is preferable because of its superior sealing performance.

The piston ring according to the present invention is not limited to that formed by a single member as shown in Fig. 1 , and thus the piston ring may be formed by combining a plurality of members to form an annular body.

Fig. 2 is a sectional view of an example of the hydrogen gas reciprocating compressor including the piston ring according to the present invention. A compressing mechanism 2 of the hydrogen gas reciprocating compressor is formed by a cylinder 3 and a piston 4. The piston 4 is connected to a piston rod 5. A plurality of annular grooves for allowing the piston ring 1 to be mounted thereto is formed on an outer peripheral surface of the piston 4. The piston ring 1 is radially enlarged using its elastic deformation so as to be mounted to each annular groove. The number of the piston rings to be mounted to the piston is not especially limited. In the example shown in Fig. 2 , six seal rings are mounted. Hydrogen gas is introduced into a compression chamber 6 and is compressed by the piston 4 reciprocating relative to the cylinder 3, and then the hydrogen gas is exhausted outside.

An example of the gas includes hydrogen gas. A hydrogen gas reciprocating compressor that compresses hydrogen gas is installed in a hydrogen station and is used for filling hydrogen gas into fuel cell vehicles or hydrogen vehicles.

A resin composition employed in the piston ring according to the present invention is now described.

### First embodiment

In the first embodiment of the present invention, at least PEEK resin or thermoplastic polyimide resin is employed as a base resin of the resin composition.

The average molecular weight and the molecular distribution of the PEEK resin to be employed as the base resin of the resin composition are not especially limited. Examples of the PEEK resin as a commercially available product include PEEK 90P, PEEK 150P, PEEK 380P, PEEK 450P, and PEEK 650P produced by Victrex Japan Inc. The melt viscosity of the PEEK resin at the shear rate of 1,000/s and the temperature of 400 °C is not especially limited, however the melt viscosity is preferably 200-550 Pa·s based on a measuring method defined in ISO 11443. With the melt viscosity set in this range, the molding process can be performed by injection molding and the wear resistance of the piston ring used in the reciprocating compressor is easily secured. The melt viscosity is preferably 270-550 Pa·s, more preferably 350-550 Pa·s, and further more preferably 350-500 Pa·s. The above-described PEEK resin may combine any PEEK resins having different melt viscosities, however the melt viscosity of the combined PEEK resin preferably fulfills the range of 200-550 Pa·s.

The PEEK resin does not contain the sulfur atom in its molecular structure as represented by the following formula (1), however the PEEK resin may contain the sulfur atom as an impurity because diphenyl sulfone used for polymerization remains therein.

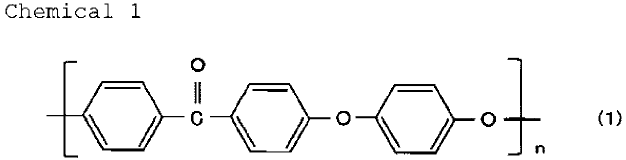

The thermoplastic polyimide resin employed as the base resin of the resin composition, which is not included within the present invention, preferably has high glass transition point and high melting point and is capable of being subjected to melt molding such as injection molding. Specifically, the imide-based resin is preferable that has a structure in a recurring unit of the molecular structure as represented by the following formula (2). The structure has an imide group superior in thermal property and mechanical strength that surrounds an aromatic group and has a plurality of ether bonds showing appropriate melting performance when energy such as heat is applied thereto. In particular, the thermoplastic polyimide resin is preferable that has two ether bonds in the recurring unit for fulfilling the mechanical property, rigidity, heat resistance, and injection molding performance.

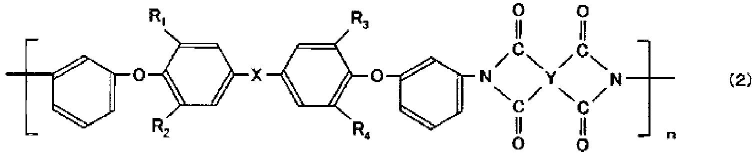

In the formula (2) , X denotes a direst bond or a group selected from among a 1-10C hydrocarbon group, a hexafluoride isopropylidene group, a carbonyl group, a thiol group, and a sulfonyl group. R1 to R4 denote hydrogen, a 1-5C lower alkyl group, a 1-5 lower alkoxy group, chlorine, or bromine. R1 to R4 may be identical to each other or different from each other. Y denotes a tetravalent group selected from among a 2C or more aliphatic group, a cyclic aliphatic group, a monocyclic aromatic group, a condensed polycyclic aromatic group, a non-condensed polycyclic aromatic group in which aromatic groups are bonded to each other directly or via a cross-linking group.

Examples of the thermoplastic polyimide resin as a commercially available product include Aurum (registered trademark) produced by Mitsui Chemicals, Inc. and Therplim (registered trademark) produced by Mitsubishi Gas Chemical Company, Inc. Of these thermoplastic polyimide resins, Aurum represented by the formula (2) is especially preferable because the Aurum has the glass transition point of 250 °C and the melting point of 388 °C and thus is extremely superior in heat resistance. In Aurum, X is a direct bond and each of R1 to R4 is hydrogen in the formula (2). Examples of the grades of Aurum employed in the piston ring of the first embodiment (this shall be applied to a second embodiment described below) include PD250, PD400, PD450, and PD500.

In a case in which the resin composition employed in the first embodiment contains the PEEK resin as a base resin, the resin composition contains preferably 50-95 vol% of the PEEK resin, more preferably 60-90 vol% of the PEEK, further more preferably 70-80 vol% of the PEEK, relative to the whole of the resin composition. In a case in which the PEEK resin is employed, the PEEK resin may combine any PEEK resins having different melt viscosities. In a case in which thermoplastic polyimide resin is employed, the thermoplastic polyimide resin may combine any thermoplastic polyimide resins having different melt viscosities.

The resin composition of the first embodiment may employ a combination of the PEEK resin and the thermoplastic polyimide resin. In this case, the total content of the PEEK resin and the thermoplastic polyimide resin is preferably 50-95 vol%, more preferably 60-90 vol%, further more preferably 70-80 vol%, relative to the whole of the resin composition. In a case in which the resin composition contains the PEEK resin and the thermoplastic polyimide resin, the resin having larger content (vol%) is the main component. In a case in which the contents (vol%) of the resins are identical to each other, both resins are the main component.

Considering the sealing performance of the piston ring, low hydrogen gas permeability of the PEEK resin and the thermoplastic polyimide resin is preferable. The hydrogen gas permeability may be, for example, 7 × 10-12 mol/ (m2 ·s·Pa) or less measured based on a measuring method defined in JIS K7126-1.

The resin composition contains a carbon material of which the content of the sulfur atom is 200 ppm or less. The carbon material unintentionally (normally) contains sulfur. The content of the sulfur atom in the carbon material is preferably 100 ppm or less, more preferably 50 ppm or less. The carbon material may be one or more of carbon fiber, graphite and coke powder. In a case in which the resin composition contains two or more kinds of the carbon materials, the content of the sulfur atom in each carbon material is 200 ppm or less.

Considering the improvement of the wear resistance, the carbon material preferably includes at least carbon fiber. In this case, only the carbon fiber may be employed as the carbon material, or alternatively a combination of the carbon fiber and the graphite, the carbon fiber and the coke powder, or the carbon fiber, the graphite and the coke powder may be employed as the carbon material.

The content of the sulfur atom in each of the carbon fiber, the graphite, and the coke powder (the content (wt%) of each carbon material relative to the whole of the carbon materials (100 wt%)) is measured by a well-known method. For example, Inductively Coupled Plasma Mass Spectrometer (ICP-MS) may be employed. A triple quadrupole inductively coupled plasma mass spectrometer (ICP-MS/MS) may be also employed for the measurement with higher precision. An example of a preparation method before the analysis includes a method that filters a decomposed solution obtained through acid decomposition by a microwave sample preparation device and that obtains supernatant as an analysis sample. Whether or not the decomposition residue contains the sulfur atom may be checked by a known analysis method using an X-ray fluorescence analyzer.

The carbon fiber may contain the sulfur atom in a raw material such as petroleum pitch, or sulfuric acid may be used in a producing process of the carbon fiber, and thus the sulfur atom might remain as an impurity. Further, the natural graphite in the underground contains sulfur as an impurity. The artificial graphite and the coke powder contain sulfur because they are derived from petroleum.

In a case in which the resin composition is employed as a material of the piston ring of the hydrogen gas reciprocating compressor, as the content of the sulfur atom in the carbon material is lower, the sulfur component is hardly introduced into the compression gas, and thus a generating efficiency of the fuel cell is hardly deteriorated.

According to the first embodiment of the present invention, by employing the resin composition that restricts the content of the sulfur atom in the carbon material, a piston ring can be provided that eliminates the need for a heat treatment in a special atmosphere such as exposing to hydrogen atmosphere (desulfurizing treatment). The piston ring of the present invention eliminates the need for the heat treatment in the special atmosphere and thus a special exposing device, so that a strict safety measure is not necessary, which leads to low cost.

Any of pitch based carbon fiber and PAN based carbon fiber that are classified based on raw material may be employed as the carbon fiber to be compounded into the resin composition. The baking temperature is not limited, and thus either graphitized material baked at 2,000 °C or more and carbonized material baked at 1,000-1,500 °C may be employed. Examples of the milled fiber as a commercially available produce employed in the first embodiment include Kreca M-101S, M-101F, M107T, and M-201S produced by Kureha Corporation. Further, examples of the PAN based carbon fiber include HT M800 160MU and HT M100 40MU produced by TEIJIN LIMITED and Trayca MLD-30 and MLD-300 produced by Toray Industries, Inc.

In the pitch based carbon fiber, the pitch in a raw material contains sulfur as an impurity. Further, in the PAN based carbon fiber, sulfur might remain after a surface treatment using sulfuric acid. The PAN based carbon fiber of which the content of the sulfur atom is relatively low compared to the pitch based carbon fiber, is preferable as the carbon fiber.

The average fiber length of the carbon fiber employed in the first embodiment is not especially limited, however the carbon fiber is preferably a short fiber having the average fiber length of 20-200 µm. In a case in which the average fiber length is less than 20 µm, the wear resistance is hardly improved, while in a case in which the average fiber length is more than 200 µm, the carbon fiber that is broken during the sliding easily enters between the sliding surfaces, which causes the damage or wear of the cylinder or the like. The average fiber length in this disclosure is the number-average fiber length.

The graphite to be compounded into the resin composition is a solid lubricant that improves the friction and wear performance in the non-lubricating condition. Any of natural graphite and artificial graphite may be employed as the graphite. A shape of a particle may be a scaly shape, a granular shape, a spherical shape, or the like. Any shape may be employed. Examples of the graphite as a commercially available product employed in the first embodiment include the artificial graphite KS-6, KS-25, and KS-44 produced by Imerys Graphite & Carbon Japan Ltd. The median particle diameter of the graphite may be, but not limited thereto, preferably 3-50 µm, and more preferably 10-30 µm. In a case in which the median particle diameter of the graphite is more than 50 µm, the tensile extension property of the resin composition might be deteriorated.

The coke powder compounded into the resin composition improves the wear resistance in the non-lubricating condition. The median particle diameter of the coke powder may be, but not limited thereto, preferably 3-50 µm, and more preferably 10-30 µm. In a case in which the median particle diameter of the coke powder is more than 50 µm, the tensile extension property of the resin composition might be deteriorated.

Deterioration of the tensile extension property of the resin composition caused by compounding the graphite or the coke powder having the median particle diameter of more than 50 µm, might cause the break of the piston ring when radially enlarged to be mounted to the annular groove of the piston.

The median particle diameter (D50 ) of each of the graphite, the coke powder and PTFE resin described below employed in the present invention is the particle diameter of a point of which the accumulated value is 50% in an accumulated distribution as the particle diameter distribution and is measured by, for example, a particle diameter distribution measurement device using a laser light scattering method.

The resin composition preferably contains the PTFE resin in addition to the above-described carbon material. The PTFE resin is a solid lubricant that improves the friction and wear performance of the resin composition in the non-lubricating condition. As the PTFE resin, any of molding powder obtained through a suspension polymerization method, fine powder obtained through an emulsion polymerization method, and recycled PTFE may be employed. In order to stabilize the flowability of the resin composition, it is preferable to employ the recycled PTFE that is hardly fibered by the shearing in molding and hardly increases the melt viscosity. The recycled PTFE denotes heat-treated powder (heat hysteresis has been applied thereto), or powder that has been irradiated with γ rays or electron rays. Examples of the recycled PTFE include : powder formed by heat-treating the molding powder or the fine powder; powder formed by irradiating the powder formed by heat-treating the molding powder or the fine powder, with γ rays or electron rays; powder formed by grinding a molding body of the molding powder or the fine powder; powder formed by irradiating the powder formed by grinding a molding body of the molding powder or the fine powder, with γ rays or electron rays; powder formed by irradiating the molding powder or the fine powder with γ rays or electron rays; and powder formed by irradiating the molding powder or the fine powder with γ rays or electron rays and then heat-treated. The median particle diameter of the PTFE resin is not especially limited, however the median particle diameter is preferably 10-50 µm.

Examples of the PTFE resin as a commercially available product employed in the present invention, include KTL-61 0, KTL-450, KTL-350, KTL-8N, and KTL-400H produced by KITAMURA LIMITED; Teflon (registered trademark) 7-J and TLP-10 produced by Chemours-Mitsui Fluoroproducts Co.,Ltd.; Fluon G163, L150J, L169J, L170J, L172J, L173J, and L182J produced by AGC Inc.; Polyflon M-15 produced by DAIKIN INDUSTRIES, LTD.; and Dyneon TF9205 and TF9207 produced by 3M Japan Limited. Further, PTFE resin modified by a perfluoroalkylether group, a fluoroalkyl group, or a side chain group containing other fluoroalkyl may be employed. The PTFE resins irradiated with γ rays or electron rays among the above-described PTFE resins correspond to KTL-610, KTL-450, KTL-350, KTL-8N, and KTL-8F produced by KITAMURA LIMITED; and Fluon L169J, L170J, L172J, L173J, and L182J produced by AGC Inc.

The resin composition contains 5-35 vol% of the total of at least one carbon material selected from among the carbon fiber, the graphite and the coke powder, relative to relative to the whole of the resin composition. In a case in which the total compound rate of the carbon materials is less than 5 vol%, the wear resistance is hardly improved, while in a case in which the total compound rate of the carbon materials is more than 35 vol%, the melt viscosity of the resin composition is high, which becomes difficult to perform the injection molding, and also the tensile extension property might be deteriorated. The total compound rate of the carbon materials is preferably 5-25 vol%, and more preferably 10-20 vol%.

The resin composition preferably further contains 5-25 vol% of the PTFE resin relative to the whole of the resin composition. In a case in which the compound rate of the PTFE resin is less than 5 vol%, the friction and wear resistance is hardly improved in the non-lubricating condition, while in a case in which the compound rate of the PTFE resin is more than 25 vol%, the tensile extension property of the resin composition might be deteriorated. The compound rate of the PTFE resin is preferably 10-20 vol%.

In addition to the carbon materials and the PTFE resin, a well-known additive for resin may be compounded into the resin composition to such an extent that does not deteriorate an advantage of the present invention. Examples of the additive include aramid fiber, an inorganic matter (mica, talc, calcium carbonate, and boron nitride), whisker (calcium carbonate, and potassium titanate), a coloring agent (iron oxide, titanium oxide, and carbon black), and other resin component. In a case in which the additive of which the content of the sulfur atom is more than 200 ppm is compounded, it is preferable that the compound rate of the additive is 3 vol% or less relative to the whole of the resin composition. It is preferable that the above-described resin composition does not contain sulfide such as molybdenum disulfide and tungsten disulfide.

Further, in a case in which resin other than the PEEK resin, the thermoplastic polyimide resin and the PTFE resin is compounded to such an extent that does not deteriorate the advantage of the present invention, it is preferable that the resin does not contain the sulfur atom in its molecular structure. Thus, it is preferable that the resin composition does not contain PPS resin, polyethersulfone (PES) resin, polysulfone (PSU) resin, and polyphenylsulfone (PPSU) resin each containing the sulfur atom in its molecular structure. The PPS resin contains the sulfur atom in its molecular structure as represented by the following formula (3) . Also, each of the PES resin, the PSU resin, and the PPSU resin has a molecular structure including a sulphonyl group and thus contains the sulfur atom.

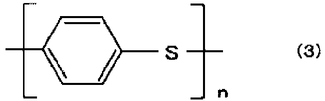

The content of the sulfur atom in the piston ring of the present invention is measured by, for example, Inductively Coupled Plasma Mass Spectrometer (ICP-MS). A triple quadrupole inductively coupled plasma mass spectrometer (ICP-MS/MS) may be also employed for measuring with higher precision. An example of a preparation method before the analysis includes a method that filters a decomposed solution obtained through acid decomposition by a microwave sample preparation device and that obtains supernatant as an analysis sample. Whether or not the decomposition residue contains the sulfur atom may be checked by a known analysis method using an X-ray fluorescence analyzer.

The content of the sulfur atom in the piston ring of the first embodiment is preferably 0.1 wt% or less, more preferably 0.05 wt% or less, further more preferably 0.025 wt% (250 ppm) or less, especially further more preferably 0.020 wt% (200 ppm) or less, relative to the whole of the resin composition (100 wt%) .

### Second embodiment, not covered by the invention

In the second embodiment, thermoplastic polyimide resin or the polyamideimide resin is employed as a base resin of the resin composition.

The thermoplastic polyimide resin, which is similar to that in the first embodiment, may be employed.

The polyamideimide resin has an imide bond and an amide bond in its polymeric main chain. An example of the polyamideimide resin includes an aromatic polyamideimide resin in which the imide bond and the amide bond are bonded to each other via an aromatic group as represented by the following formula (4).

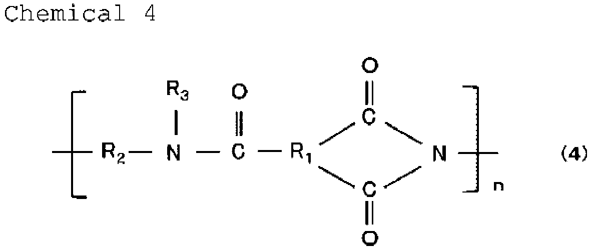

In the formula (4), R1 denotes a trivalent aromatic group having at least one benzene ring. R2 denotes a bivalent organic group. R3 denotes hydrogen, a methyl group or a phenyl group.

Examples of the aromatic polyamideimide resin include: polyamideimide resin formed from aromatic primary diamine (for example, diphenylmethane diamine) and aromatic tribasic acid anhydride (for example, mono or diacylhalide derivative of trimellitic acid anhydride); and polyamideimide resin formed from aromatic tribasic acid anhydride and an aromatic diisocyanate compound (for example, diphenylmethane diisocyanate).

An example of the polyamideimide resin as a commercially available product includes Torlon (registered trademark) produced by Solvay Specialty Polymers Japan, K.K. An example of the grade of Torlon employed in the piston ring of the second embodiment includes 4000T.

The resin composition employed in the second embodiment contains preferably 50-95 vol% of the thermoplastic polyimide resin or the polyamideimide resin, more preferably 60-90 vol% of the thermoplastic polyimide resin or the polyamideimide resin, further more preferably 70-80 vol% of the thermoplastic polyimide resin or the polyamideimide resin, relative to the whole of the resin composition. In a case in which the thermoplastic polyimide resin is employed, the thermoplastic polyimide resin may combine any thermoplastic polyimide resins having different melt viscosities. In a case in which the polyamideimide resin is employed, the polyamideimide resin may combine any polyamideimide resins having different melt viscosities.

Considering the sealing performance of the piston ring, low hydrogen gas permeability of the thermoplastic polyimide resin and the polyamideimide resin is preferable. The hydrogen gas permeability may be, for example, 7 × 10-12 mol/ (m2 ·s·Pa) or less measured based on a measuring method defined in JIS K7126-1.

It is preferable that the resin composition does not contain the carbon material such as carbon fiber, graphite, and coke powder, sulfide such as molybdenum disulfide and tungsten disulfide, and carbon black. For example, the carbon black contains the sulfur atom as bonding sulfur of polycyclic aromatic hydrocarbon.

It is preferable that the resin composition contains at least one of the PTFE resin and the aromatic polyester resin that do not contain sulfur. Further, it is more preferable that the resin composition contains both of the PTFE resin and the aromatic polyester resin. In this case, the total content of the PTFE resin and the aromatic polyester resin is preferably 5-50 vol% relative to the whole of the resin composition. In a case in which the total content is less than 5 vol%, the wear resistance is hardly improved, while in a case in which the total content is more than 50 vol%, the melt viscosity of the resin composition is high, which becomes difficult to perform the injection molding. Relating to the contents of the PTFE resin and the aromatic polyester resin from a viewpoint of the wear resistance, the content of the PTFE resin is preferably 5-25 vol% (more preferably 10-20 vol%) and the content of the aromatic polyester resin is preferably 5-25 vol% (more preferably 10-20 vol%), relative to the whole of the resin composition.

The PTFE resin is a solid lubricant that improves the friction and wear performance of the resin composition in the non-lubricating condition. The PTFE resin described in the first embodiment may be employed.

Examples of the aromatic polyester resin include SumikaSuper E101-S, E101-S2, E101-P, and E101-M produced by SUMITOMO CHEMICAL COMPANY, LIMITED, and Supernol S101 Plus, S101B, and S101P produced by Egene optelectronic materials company. The median particle diameter of the aromatic polyester resin may be, but not especially limited thereto, preferably 5-50 µm. In a case in which the median particle diameter of the aromatic polyester resin is more than 50 µm, the tensile extension property of the resin composition might be deteriorated. Deterioration of the tensile extension property of the resin composition might cause the break of the piston ring when radially enlarged to be mounted to the annular groove of the piston.

The median particle diameter (D50) of each of the PTFE resin, and the aromatic polyester resin in the second embodiment is the particle diameter of a point of which the accumulated value is 50% in an accumulated distribution as the particle diameter distribution and is measured by, for example, a particle diameter distribution measurement device using a laser light scattering method.

A well-known additive for resin may be compounded into the resin composition to such an extent that does not deteriorate an advantage of the present invention. The additive described in the first embodiment may be employed. In a case in which the additive contains active sulfur as an impurity, the additive may be compounded after the sulfur is eliminated by applying a heat treatment to the additive.

In a case in which resin other than the thermoplastic polyimide resin, the polyamideimide resin, the PTFE resin, and the aromatic polyester resin is compounded to such an extent that does not deteriorate the advantage of the present invention, resin other than the PEEK resin, the PPS resin, the PES resin, the PSU resin, and the PPSU resin is preferably employed. As represented in the above-described formula (1), the PEEK resin does not contain sulfur atom in its molecular structure, however the PEEK resin may contain the sulfur atom as an impurity because diphenyl sulfone used for polymerization remains therein. The PPS resin contains the sulfur atom in its molecular structure as represented by the above-described formula (3). Also, each of the PES resin, the PSU resin, and the PPSU resin has a molecular structure including a sulphonyl group and thus contains the sulfur atom.

As described above, the especially preferable aspect of the resin composition of the second embodiment is the resin composition that contains the thermoplastic polyimide resin or the polyamideimide resin as a main component, and that contains 5-25 vol% of the PTFE resin and 5-25 vol% of the aromatic polyester resin relative to the whole of the resin composition, and the content of the sulfur atom is less than 5 ppm.

### Third embodiment

The piston ring of the third embodiment is formed of a resin composition containing the PEEK resin as a base resin. The PEEK resin, which is similar to that in the first embodiment, may be employed.

The resin composition employed in the third embodiment preferably contains 50-90 vol% of the PEEK resin, more preferably 60-90 vol% of the PEEK resin, further more preferably 70-80 vol% of the PEEK resin, relative to the whole of the resin composition.

The resin composition preferably contains 5-25 vol% of carbon fiber relative to the resin composition. In a case in which the carbon fiber is less than 5 vol%, the wear resistance is hardly improved, while in a case in which the carbon fiber is more than 25 vol%, the melt viscosity of the resin composition is high, which becomes difficult to perform the injection molding. The content of the carbon fiber is preferably 10-20 vol%.

The average fiber length of the carbon fiber is not especially limited, however the carbon fiber is preferably a short fiber having the average fiber length of 20-200 µm.

Any of pitch based carbon fiber and PAN based carbon fiber that are classified based on raw material may be employed as the carbon fiber to be compounded into the resin composition. Specifically, the carbon fiber described in the first embodiment may be employed.

The resin composition preferably contains 5-25 vol% of total of at least one solid lubricant selected from among the PTFE resin and the graphite, relative to the resin composition. In a case in which the compound rate of the total of at least one solid lubricant selected from among the PTFE resin and the graphite is less than 5 vol%, the friction and wear performance is hardly improved in the non-lubricating condition, while in a case in which the compound rate of the total of at least one solid lubricant selected from among the PTFE resin and the graphite is more than 25 vol%, the tensile extension property of the resin composition might be deteriorated. Deterioration of the tensile extension property might cause the break of the piston ring when radially enlarged to be mounted to the annular groove of the piston. The compound rate of the solid lubricant is more preferably 10-20 vol%.

The PTFE resin is a solid lubricant that improves the friction and wear performance of the resin composition in the non-lubricating condition. The PTFE resin described in the first embodiment may be employed.

The graphite a solid lubricant that improves the friction and wear performance in the non-lubricating condition, similar to the PTFE resin. Any of natural graphite and artificial graphite may be employed as the graphite. A shape of a particle may be a scaly shape, a granular shape, a spherical shape, or the like. An example of the natural graphite includes ACP produced by Nippon Graphite Industries, Co.,Ltd. Examples of the artificial graphite include KS-6, KS-25, and KS-44 produced by Imerys Graphite & Carbon Japan Ltd. The median particle diameter of the graphite may be, but not especially limited thereto, preferably 3-50 µm, and more preferably 10-30 µm. In a case in which the median particle diameter of the graphite is more than 50 µm, the tensile extension property of the resin composition might be deteriorated. Deterioration of the tensile extension property of the resin composition might cause the break of the piston ring when radially enlarged to be mounted to the annular groove of the piston. Each of the natural graphite and the artificial graphite contains sulfur as an impurity.

The median particle diameter (D50) of each of the PTFE resin and the graphite employed in the third embodiment is the particle diameter of a point of which the accumulated value is 50% in an accumulated distribution as the particle diameter distribution and is measured by, for example, a particle diameter distribution measurement device using a laser light scattering method.

In the resin composition, the carbon fiber and the above-described solid lubricant may be combined and compounded, or only one of the carbon fiber and the solid lubricant may be compounded.

A well-known additive for resin that does not intentionally contain sulfur may be compounded into the resin composition to such an extent that does not deteriorate an advantage of the present invention. Examples of the additive include an inorganic matter (mica, talc, calcium carbonate, and boron nitride), whisker (calcium carbonate, and potassium titanate), a coloring agent (carbon black, iron oxide, and titanium oxide), and other resin component. The above-described additive for resin might contain sulfur as an impurity. For example, the carbon black contains the sulfur that is bonded to polycyclic aromatic hydrocarbon.

Further, resin that has a glass transition point higher than that of the PTFE resin and does not intentionally contain sulfur may be compounded into the resin composition at a compound rate smaller than that of the PEEK resin, to such an extent that does not deteriorate the advantage of the present invention. This configuration can prevent the elastic modulus from decreasing in a temperature range higher than the glass transition point of the PEEK resin (143 °C) . Examples of such resin include thermoplastic polyimide resin, thermosetting polyimide resin, polyamideimide resin and polyetherimide resin, and the compound rate thereof may be, for example, 1-10 vol% relative to the whole of the resin composition.

It is preferable that the carbon fiber, the PTFE resin, the graphite, and the other additives compounded into the resin composition employed in the third embodiment do not intentionally contain sulfur atom (except containing the sulfur atom as an impurity) . Specifically, it is preferable that the resin composition does not contain PPS resin and molybdenum disulfide.

As described above, an especially preferable aspect of the resin composition employed in the third embodiment according to the present invention contains: the PEEK resin, as a base resin, the PEEK resin having the melt viscosity of 270-550 Pa·s at the shear rate of 1,000/s and the temperature of 400 °C measured by a measuring method defined in ISO 11443; 5-25 vol% of the carbon fiber relative to the whole of the resin composition; and 5-25 vol% of the solid lubricant (at least one of the PTFE resin and the graphite) relative to the whole of the resin composition, wherein the average fiber length of the carbon fiber is 20-200 µm. Further, the resin composition may preferably contain 10-20 vol% of the carbon fiber relative to the whole of the resin composition, and 10-20 vol% of the PTFE resin relative to the whole of the resin composition.

The piston ring of the third embodiment is manufactured by applying a heat treatment to a molded body of the resin composition at a specified temperature. The piston ring has the endothermic peak due to the heat hysteresis in a range of 150-330 °C in the temperature increasing process of the Differential Scanning Calorimetry caused by the heat treatment. Thus, in addition to the endothermic peak due to the melting point (approximately 343 °C) of the PEEK resin, the piston ring has the endothermic peak in a range of 150-330 °C.

For example, in the hydrogen gas reciprocating compressor, in a case in which the compressed hydrogen gas contains a sulfur component, performance of the fuel cell might be deteriorated. Thus, the content of the sulfur atom in the piston ring is required to be low. Accordingly, the content of the sulfur atom in the piston ring is preferably 0.1 wt% or less relative to the whole of the resin composition (100 wt%), more preferably 0.05 wt% or less, further more preferably 0.025 wt% (250 ppm) or less, and especially more preferably 0.020 wt% (200 ppm) or less.

Next, the manufacturing method of the piston ring s described.

After the materials that form the above-described resin composition are mixed as needed using a Henschel mixer, a ball mixer, a ribbon blender or the like, the materials are melt-kneaded using a melt extruder such as a twin-screw melt extruder to obtain molding pellets. Further, in the melt-kneading by the twin-screw melt extruder or the like, a side feed may be employed for charging the carbon material, the PTFE resin, the aromatic polyester resin, and the above-described additives for resin.

### Molding process

A molding process may be performed using the molding pellets for molding, for example, (1) a ring-like molded body, or (2) a molded body (molded material) to be machined into a ring shape. For example, the piston ring is obtained by means of injection molding using the molding pellets . The piston ring having a specified shape may be formed through an additional processing or the whole processing on the injection-molded material. A compression molding, an injection molding, or an extrusion molding may be appropriately selected as the molding method. Of these molding methods, the injection molding is preferable.

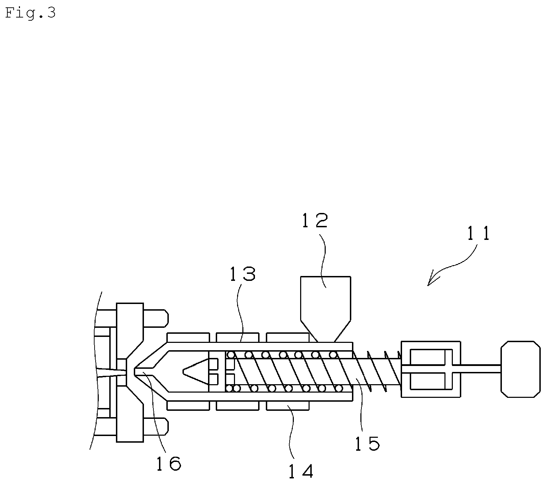

Fig. 3 is a schematic view of an injection molding device used in the injection molding. The molding pellets obtained by kneading the resin composition are employed as a raw material. The molding pellets are charged into a hopper 12 of an injection molding device 11 and are introduced into a cylinder 13 from the hopper 12. Thereafter, the molding pellets are heated and melted by a heater 14 within the cylinder 13 and extruded by a screw 15 toward a nozzle 16 via a measuring part, as a melting resin for one shot of a molded body. The melting resin is injected from the nozzle 16 via a gate into a cavity having a desired shape to mold a molded body. Examples of the desired shape include the shapes of the above described molded bodies (1) and (2) .

In a case in which the resin composition contains the PEEK resin as a main component, it is preferable that the maximum temperature in the nozzle 16 or the cylinder 13 of the injection molding device 11 performing the injection molding is 380 °C or more at a measured temperature of the resin. The boiling point of diphenyl sulfone that remains in the PEEK resin is 379 °C, and thus the diphenyl sulfone in the PEEK resin is easily eliminated by setting the maximum temperature in the nozzle 16 or the cylinder 13 to 380 °C or more at a measured temperature of the resin. In a case in which the filling material such as carbon fiber, graphite, and carbon black each containing sulfur as an impurity is compounded into the resin composition, this temperature condition is effective to previously eliminate the active sulfur in the filling material. The maximum temperature is more preferably 380-420 °C at the measured temperature of the resin.

In the injection molding device, the measured temperature of the resin might be higher than the setting temperature of the nozzle and the cylinder due to heat generation caused by shear force applied to the resin. In such a case, the setting temperature may be less than 380 °C as long as the measured temperature is more than 380 °C.

Also in a case in which the molding pellets are formed by the melt extruder, similar to the above-described case using the injection molding, it is preferable that the maximum temperature in the nozzle or the cylinder of the melt extruder is 380 °C or more at a measured temperature of the resin. Thus, the diphenyl sulfone in the PEEK resin is easily eliminated. The maximum temperature is more preferably 380-420 °C at the measured temperature of the resin.

In the melt extruder, the measured temperature of the resin might be higher than the setting temperature of the nozzle and the cylinder due to heat generation caused by shear force applied to the resin. In such a case, the setting temperature may be less than 380 °C as long as the measured temperature is more than 380 °C.

The molding pellet of the resin composition employed in the injection molding may contain recycled materials formed of crushed sprue and/or runner caused in the injection molding. The number of heat hysteresis applied to the recycled material is larger than a virgin material, so that it is advantageous for eliminating the diphenyl sulfone that the molding pellet contains the recycled material.

### Heat treatment process

The molded body to be subjected to the heat treatment may be (1) the above-described ring-like molded body, or (2) the above-described molded body (molded material) to be machined into a ring shape or the machined product (additional processing or whole processing) of the above-described molded material.

In a case in which the resin composition contains the PEEK resin as a main component, it is preferable that the heat treatment is performed on the injection-molded material, the piston ring formed by machining the injection-molded material, or the piston ring molded by the injection molding. The heat treatment is preferably performed at the maximum temperature of 150-330 °C. The melting point of the diphenyl sulfone that remains in the PEEK resin is 127 °C. Further, a molecular chain in the PEEK resin easily moves at the glass transition point (143 °C) or more, and thus the diphenyl sulfone is easily eliminated by evaporation. Accordingly, it is preferable that the maximum temperature of the heat treatment is 150 °C or more. In a case in which the maximum temperature is less than 150 °C, the content of the sulfur is hardly decreased.

The maximum temperature in the heat treatment process is preferably 150-250 °C, more preferably 200-250 °C. In a case in which the maximum temperature is more than 250 °C, for example, the molded body might be deformed when the heat treatment is performed after the injection molding. Further, the maximum temperature is preferably higher than the use temperature of the piston ring, more preferably higher than the use temperature by 30 °C or more. The duration time for keeping the maximum temperature is not especially limited, however the duration time may be, for example, 4-8 hours. The heat treatment is effective to decrease the sulfur in the piston ring, and thus the sulfur containing gas generated during the use of the piston ring is decreased in advance. Further, the heat treatment is effective to eliminate the diphenyl sulfone by evaporation and to especially effective to eliminate the active sulfur in the filling material in advance in a case in which the filling material containing the sulfur as an impurity, such as the carbon fiber, the graphite, and the carbon black is compounded into the resin composition.

When the Differential Scanning Calorimetry (DSC) is executed on the injection-molded material, the piston ring formed by machining the inj ection-molded material or the piston ring formed by the injection molding after the heat treatment is applied thereto, an endothermic peak that does not appear without the heat treatment (hereinafter, the endothermic peak is referred to as an endothermic peak due to heat hysteresis) appears in a temperature increasing process. The endothermic peak due to the heat hysteresis appears at a temperature equivalent to the maximum temperature of the heat treatment or a temperature slightly higher (within + 20 °C) than the maximum temperature of the heat treatment. Accordingly, the maximum temperature of the heat treatment can be assumed. The piston ring has the endothermic peak due to the heat hysteresis caused by the heat treatment, preferably in a range of 150-330 °C in the temperature increasing process of the Differential Scanning Calorimetry (preferably in a rage of 150-250 °C, more preferably in a range of 200-250 °C). In this case, the piston ring has the endothermic peak in a range of 150-330 °C, in addition to the endothermic peak due to the melting point (approximately 343 °C) of the PEEK resin. The Differential Scanning Calorimetry may be executed under a condition of, for example, the temperature increasing rate of 15 °C/minute in nitrogen gas.

The heat treatment may be performed in atmosphere. This configuration eliminates the need for the heat treatment in special atmosphere such as exposure to the hydrogen atmosphere (a desulfurizing treatment) and thus eliminates the need for a special exposing device and a strict safety measure, which leads to low cost.

In a case in which the resin composition contains thermoplastic polyimide resin as a main component, which is not within the present invention, it is preferable that a crystallizing treatment (heat treatment) is performed on the injection-molded material, the piston ring formed by machining the injection-molded material, or the piston ring molded by the injection molding. For example, in a case in which Aurum produced by Mitsui Chemicals, Inc. is employed as the thermoplastic polyimide resin, the resin composition is hardly crystallized in the injection molding, so that crystallinity thereof may be enhanced by the crystallizing treatment. The condition of the crystallizing treatment may be that, for example, the maximum temperature of 280-320 °C is kept for two hours or more in atmosphere or in nitrogen. The crystallinity after the crystallizing treatment is preferably 20-40%. The measuring method of the crystallinity is a well-known method such as a method that measures melting calorie of the crystal by the Differential Scanning Calorimetry (DSC).

In a case in which the resin composition contains the polyamideimide resin as a main component, it is preferable that a post curing (heat treatment) is performed on the injection-molded material, the piston ring formed by machining the inj ection-molded material, or the piston ring molded by the injection molding from a viewpoint of the mechanical strength. The condition of the post curing may be that, for example, the maximum temperature of 250-260 °C is kept for 15 hours or more in atmosphere.

The crystallizing treatment and the post curing are preferably performed for eliminating the active sulfur slightly contained in the resin composition.

In this manner, the manufacturing method of the piston ring preferably includes the heat treatment process that applies the heat treatment to the molded body of the resin composition. The content of the sulfur atom in the molded body can be decreased through the specified heat treatment process.

### EXAMPLE

The present invention is further specifically described with reference to the following Examples. However, the present invention is not limited to the following Examples.

### <Example A>Examples A1 to A6

An injection-molded material having a size of ϕ8 × 20 mm was formed by the injection molding using each of the PEEK resin composition (Examples A1, A2, A5 and A6) and the thermoplastic polyimide resin composition (Examples A3 and A4) having the compound rate (vol%) shown in Table 1.

The injection-molded material formed of the PEEK resin composition was subjected to the heat treatment at the maximum temperature of 200 °C kept for four hours and was machined to form a pin test piece having a size of ϕ3 × 13 mm. The injection-molded material formed of the thermoplastic polyimide resin composition was subjected to the crystallizing treatment at the maximum temperature of 320 °C kept for two hours and was machined to form a pin test piece having a size of ϕ3 × 13 mm.

The raw materials employed in the resin compositions are described below. The content of the sulfur atom is 50 ppm or less in the carbon fiber (CF-1) and 200 ppm or less in the carbon fiber (CF-2) measured by the ICP-MS. The graphite is employed of which the content of the sulfur atom is 50 ppm or less measured by the ICP-MS. The content of the sulfur atom in the carbon black is 3,200 ppm measured by the ICP-MS.
- (1) PEEK resin (PEEK)
   PEEK 150P produced by Victrex Japan Inc.
- (2) Thermoplastic polyimide resin (TPI)
   PD450 produced by Mitsui Chemicals, Inc.
- (3) PTFE resin (PTFE)
   KTL-450 produced by KITAMURA LIMITED
- (4) Carbon fiber (CF-1)
   HT M100 40MU (average fiber length of 40 µm) produced by TEIJIN LIMITED
- (5) Carbon fiber (CF-2)
   Kreca M201S (average fiber length of 150 µm) produced by Kureha Corporation
- (6) Graphite (GRP)
   TIMREX KS25 produced by Imerys Graphite & Carbon Japan Ltd.
- (7) Carbon black (CB)
   Friction and wear test

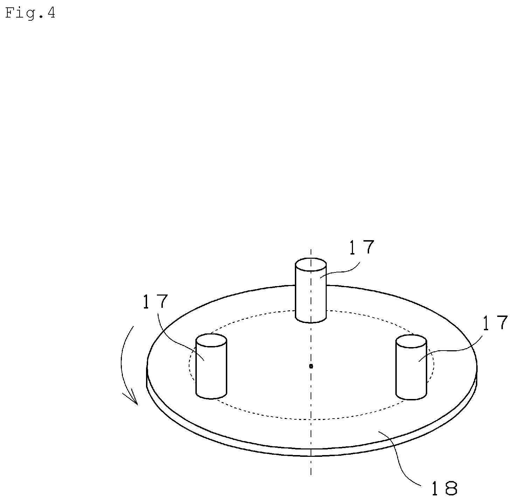

The friction and wear test was executed on the obtained pin test piece using a pin-on-disk tester shown in Fig. 4. As shown in Fig. 4, test faces of three pin test pieces 17 were pressed on a surface of a rotary disk 18 of the tester at surface pressure described below, and then the rotary disk 18 was rotated at a room temperature. A specific test condition is described below. The material of the rotary disk 18 is SUS304. The test condition is considered as a use condition of the piston ring in the hydrogen gas reciprocating compressor.

### Test condition

- Rotation speed: 4.8 m/minute
- Surface pressure: 4 MPa
- Lubrication: None (dry)
- Temperature: Room temperature
- Time: 50 hours

A change amount of the height of each of the pin test pieces 17 after the test from the original height was measured, and a specific wear rate was calculated based on the average value of the three change amounts.

| |
|---|
| 1) measured value by ICP-MS/MS (limit of quantitation of 5 ppm) |
| 2) since injection molding was impossible, the test piece of Example A6 was measured after the molding pellets were subject to the heat treatment (maximum temperature of 200 °C kept for four hours) |
| 3) since injection molding was impossible, the measurement of the specific wear rate was not executed |

As shown in Table 1, in Examples A1 and A2 each containing total 5-35 vol% of the carbon material (at least one of the carbon fiber and the graphite) in which the content of the sulfur atom is 200 ppm or less, the specific wear rates are in a range of 81-209 × 10-8 mm3/N·m.

In Example A5 that contains the PEEK resin as a main component and does not contain the carbon material (the carbon fiber and the graphite) in which the content of the sulfur atom is 200 ppm or less, the specific wear rate is larger than those of Examples A1 and A2. In Example A6 that contains the PEEK resin as a main component and 45 vol% of carbon material (the carbon fiber) in which the content of the sulfur atom is 200 ppm or less, the melt viscosity is high and thus the injection molding is impossible.

The sulfur atom in the pin test pieces of Examples A1 to A6 were measured by the following steps. The pin test piece was frozen and crushed, and then a decomposed solution obtained through acid decomposition thereof using a microwave sample preparation device was filtered, so that supernatant was obtained as an analysis sample. The analysis executed on the analysis sample using the ICP-MS/MS. It was checked using the X-ray fluorescence analyzer that the decomposition residue does not contain the sulfur atom. The measured value of the sulfur atom by the ICP-MS/MS of Example A3 that is formed of the thermoplastic polyimide resin composition is 20 ppm, which is extremely small.

### <Example B>Examples B1 to B7

An injection-molded material having a size of ϕ8 × 20 mm was formed by the injection molding using each of the thermoplastic polyimide resin composition (Examples B1 to B4 and B6), the polyamideimide resin composition (Example B5) and the PEEK resin composition (Examples B7) having the compound rate (vol%) shown in Table 2.

The injection-molded material formed of the thermoplastic polyimide resin composition or the PEEK resin composition was machined to form a pin test piece having a size of ϕ3 × 13 mm. Only in Example B3, the injection-molded material formed of the thermoplastic polyimide resin composition was subjected to the crystallizing treatment at the maximum temperature of 320 °C kept for two hours. The injection-molded material formed of the polyamideimide resin composition was subjected to the post curing in atmosphere at the maximum temperature of 260 °C kept for 18 hours and was machined to form a pin test piece having a size of ϕ3 × 13 mm.

The raw materials employed in the resin compositions are described below.
- (1) Thermoplastic polyimide resin (TPI)
   PD450 produced by Mitsui Chemicals, Inc.
- (2) Polyamideimide resin (PAI)
   4000T produced by Solvay Specialty Polymers Japan, K.K.
- (3) Polyetheretherketone resin (PEEK)
   PEEK 150P produced by Victrex Japan Inc.
- (4) PTFE resin (PTFE)
   KTL-450 produced by KITAMURA LIMITED
- (5) Aromatic polyester resin

The friction and wear test was executed on the obtained pin test piece using the pin-on-disk tester through the similar steps to Example A.

| |
|---|
| 1) whether or not the crystallizing treatment was executed on Examples containing TPI as a main component |
| 2) measured value by ICP-MS/MS (limit of quantitation of 5 ppm) |

As shown in Table 2, in Examples B1 to B4 each containing the thermoplastic polyimide resin as a main component, the specific wear rates are in a range of 130-292 × 10-8 mm3 /N·m. Examples B2 and B3 have the same compound rate, however Example B3 to which the crystallizing treatment is applied is superior in wear resistance, compared to Example B2. Further, in Example B5 containing the polyamideimide resin as a main component, the specific wear rate is 122 × 10-8 mm3 /N·m.

In Example B6 that contains the thermoplastic polyimide resin as a main component and 3 vol% of the PTFE resin, the specific wear rate is larger than those of Examples B1 to B5.

The sulfur atom in the pin test pieces of Examples B1 to B7 were measured through the similar steps to Example A. The measured values of the sulfur atom by the ICP-MS/MS of Examples B1 to B6 are less than the limit of quantitation (5 ppm), while the measured value of the sulfur atom of Example B7 containing the PEEK resin as a main component is 80 ppm, which is larger than those of Examples B1 to B6.

### <Example C>Examples C1 to C5

The resin composition employed in Examples C1 to C5 is formed by compounding 84 vol% of the PEEK resin, 10 vol% of the carbon fiber, 5 vol% of the PTFE resin, and 1 vol% of the carbon black. The raw materials are described below.
- (1) PEEK resin
   PEEK 150P produced by Victrex Japan Inc.
- (2) Carbon fiber
   Kreca M201S (average fiber length of 150 µm) produced by Kureha Corporation
- (3) PTFE resin
   KTL-450 (median particle diameter of 22 µm) produced by KITAMURA LIMITED
- (4) Carbon black

The molding pellets formed of the resin composition having the above-described compound rate was formed by the twin-screw melt extruder. The piston ring (the outer diameter of 45 mm, a radial wall thickness of 2 mm, and the width of 2 mm) shown in Fig. 1 was obtained by means of injection molding using the obtained molding pellets. Table 3 shows the maximum temperatures of the twin-screw melt extruder and the injection molding device, the conditions for the heat treatments, and the content of the sulfur in each of the obtained piston rings.

| |
|---|
| 1) measured maximum temperatures of resin in nozzle or cylinder |
| 2) measured values after heat treatment in Examples C1 to C4 or before heat treatment in Example C5 |

In Table 3, the content of the sulfur is measured by the ICP-MS/MS. A decomposed solution obtained through acid decomposition of the piston ring using a microwave sample preparation device was filtered, so that supernatant was obtained as an analysis sample. It was checked using the X-ray fluorescence analyzer that the decomposition residue does not contain the sulfur atom.

As shown in Table 3, the content of the sulfur in the piston ring of each of Examples C1 to C4 to which the heat treatment is applied is 140-200 ppm, which is lower than that in the piston ring of Example C5 (260 ppm) without the heat treatment. Thus, the sulfur atom can be reduced by applying the heat treatment at a specified temperature. Further, comparing Example C2 and Example C4, the content of the sulfur in the piston ring of Example C2 in which the maximum temperature in the heat treatment is 200 °C, is lower than the content of the sulfur in the piston ring of Example C4 in which the maximum temperature in the heat treatment is 150 °C.

Comparing Example C1 and Example C2, the content of the sulfur in the piston ring of Example C2 in which the injection molding temperature (measured temperature) is 380 °C, is lower than the content of the sulfur in the piston ring of Example C1 in which the injection molding temperature (measured temperature) is 360 °C. Further, comparing Example C2 and Example C3, the content of the sulfur in the piston ring of Example C3 in which the maximum temperature (measured temperature) of the twin-screw melt extruder is 380 °C, is lower than the content of the sulfur in the piston ring of Example C2 in which the maximum temperature (measured temperature) of the twin-screw melt extruder is 360 °C.

The resin composition employed in the piston ring was evaluated as below.

### Examples C6 to C13

An injection-molded body having a size of ϕ8 × 20 mm was formed by the injection molding using the PEEK resin composition having the compound rate (vol%) shown in Table 4. The injection-molded material was subjected to the heat treatment at the maximum temperature of 220 °C for four hours in atmosphere and then machined to form a pin test piece having a size of ϕ3 × 13 mm.

The raw materials employed in the PEEK resin compositions are described below. The melt viscosity of each of the PEEK-1 to PEEK-5 at the shear rate of 1,000/s and the temperature of 400 °C is measured based on a measuring method defined in ISO 11443.
- (1) PEEK-1
   PEEK 90P (melt viscosity of 90 Pa·s) produced by Victrex Japan Inc.
- (2) PEEK-2
   PEEK 150P (melt viscosity of 130 Pa·s) produced by Victrex Japan Inc.
- (3) PEEK-3
   PEEK 380P (melt viscosity of 300 Pa·s) produced by Victrex Japan Inc.
- (4) PEEK-4
   PEEK 450P (melt viscosity of 350 Pa·s) produced by Victrex Japan Inc.
- (5) PEEK-5
   PEEK 650P (melt viscosity of 500 Pa·s) produced by Victrex Japan Inc.
- (6) CF-1
   Kreca M201S (average fiber length of 150 µm) produced by Kureha Corporation
- (7) CF-2
   Trayca MLD-30 (average fiber length of 30 µm) produced by Toray Industries, Inc.
- (8) CF-3
   Kreca M107T (average fiber length of 400 µm) produced by Kureha Corporation
- (9) PTFE resin
   KTL-450 (median particle diameter of 22 µm) produced by KITAMURA LIMITED
- (10) Graphite
   CGB-20 (median particle diameter of 20 µm) produced by Nippon Graphite Industries, Co.,Ltd.

As shown in Table 4, each of Examples C6 to C8, and C10 to C13 employs a resin composition formed of the PEEK resin having a specified melt viscosity, the carbon fiber, and the PTFE resin (without graphite). Example C9 employs a resin composition formed of the PEEK resin having a specified melt viscosity, the carbon fiber, the PTFE resin, and the graphite.

The friction and wear test was executed on the obtained pin test piece through the similar steps to Example A. A specific wear rate was calculated and a wear damage of a mating material (the rotary disk 18) was visually checked. The result is shown in Table 4.

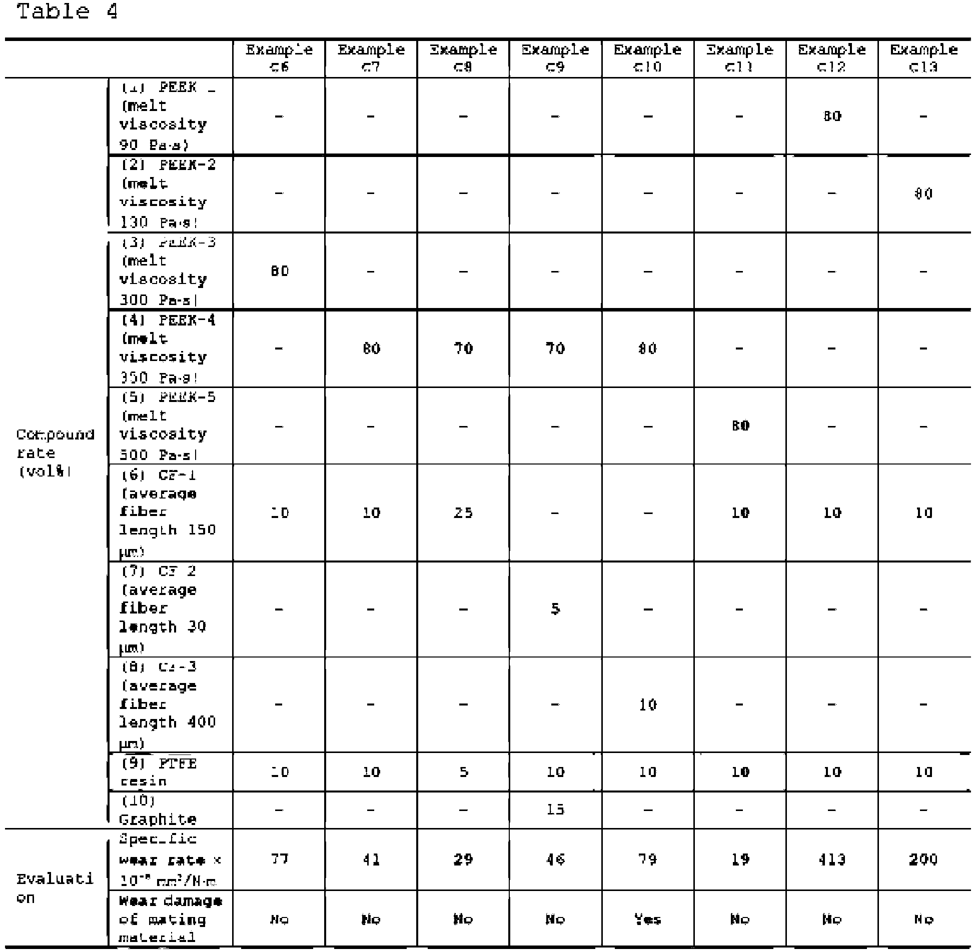

As shown in Table 4, in each of Examples C6 to C11, the specific wear rate is 19-79 × 10-8 mm3 /N·m. The specific wear rates of Examples C12 and C13 that employ the PEEK resin having the melt viscosity of less than 200 Pa·s are 413 × 10-8 mm3 /N·m and 200 × 10-8 mm3/N·m, respectively, which are inferior to Examples C6 to C11 in the wear resistance. In Example C10 (the average fiber length of the carbon fiber is 400 µm), the wear damage is slightly caused on the mating material.

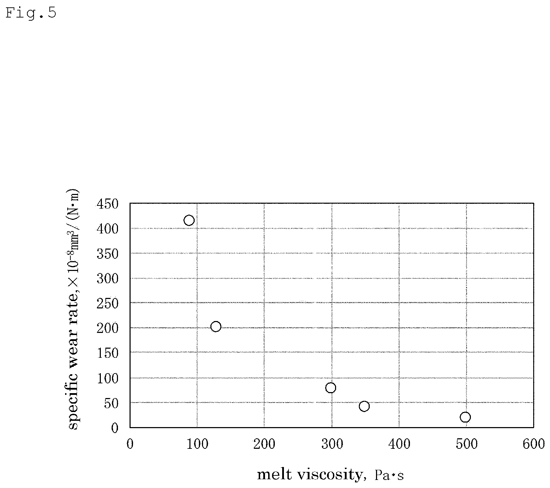

A relationship between the melt viscosity of the PEEK resin and the specific wear rate of Examples C6, C7, and C11 to C13 (a combination of 10 vol% of CF-1 and 10 vol% of the PTFE resin) is shown in Fig. 5 . As shown in Fig. 5, the specific wear rate drastically increases as the melt viscosity of the PEEK resin is below a specific value. According to this result, by setting the melt viscosity of the PEEK resin in a range of 200-550 Pa·s, the specific wear rate can be further decreased and the wear resistance can be further improved.

A quantitative analysis of the sulfur atom was executed on the injection-molded material used for forming the pin test piece of Example C6 before and after the heat treatment at the maximum temperature of 220 °C for four hours was applied thereto. The injection-molded material was frozen and crushed and then a decomposed solution obtained through acid decomposition thereof using a microwave sample preparation device was filtered, so that supernatant was obtained as an analysis sample. According to the analysis executed on the analysis sample using ICP-MS/MS, the content of the sulfur before the heat treatment is 220 ppm and the content of the sulfur after the heat treatment is 150 ppm. It was checked using the X-ray fluorescence analyzer that the decomposition residue does not contain the sulfur atom.

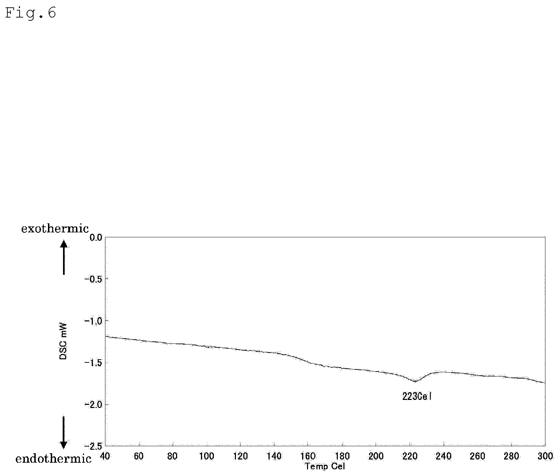

Further, an injection-molded material of a resin composition containing the PEEK resin as a main component was additionally (separately) subjected to the heat treatment at the maximum temperature of 210 °C kept for four hours. An example of the result of the Differential Scanning Calorimetry (DSC) after the heat treatment is shown in Fig. 6 . As shown in Fig. 6, the endothermic peak that does not appear on the injection-molded material without the heat treatment, was observed at 223 °C in the temperature increasing process.

In this manner, the piston rings of the above-described Example C have the endothermic peak due to the heat hysteresis in a range of 150-330 °C in the temperature increasing process of the Differential Scanning Calorimetry, in response to the maximum temperature in the heat treatment process.

### INDUSTRIAL APPLICABILITY

The piston ring according to the present invention is preferably applied to a piston ring of a hydrogen gas reciprocating compressor that compresses hydrogen gas. The piston ring according to the present invention has superior wear resistance and decreases the sulfur component in the compression gas, so that the deterioration of the performance of the fuel cell can be prevented after the compression gas is filled into the fuel cell vehicle. Further, in a case in which the content of the sulfur atom in the piston ring is less than 5 ppm, the contamination of the hydrogen gas due to the sulfur is favorably prevented.

### REFERENCE SIGNS LIST

- 1: piston ring
- 2: compressing mechanism
- 3: cylinder
- 4: piston
- 5: piston rod
- 6: compression chamber
- 11: injection molding device
- 12: hopper
- 13: cylinder
- 14: heater
- 15: screw
- 16: nozzle
- 17: pin test piece
- 18: rotary disk

## Claims

1. A piston ring (1) used in a hydrogen gas reciprocating compressor configured to compress hydrogen gas, wherein:
the piston ring (1) is formed of a resin composition containing at least polyetheretherketone resin as a main component;
the resin composition contains carbon material in which the content of sulfur atom is 200 ppm or less;
the carbon material is at least one of carbon fiber, graphite, and coke powder;
the resin composition contains total 5-35 vol% of the carbon material relative to the whole of the resin composition;
wherein the resin composition does not contain sulfide and the resin does not contain a sulfur atom in its molecular structure;
wherein the piston ring has an endothermic peak due to heat hysteresis in a range of 150-330 °C in a temperature increasing process of the differential scanning calorimetry; and
wherein the content of the sulfur atom in the piston ring (1) is 250 ppm or less.

2. The piston ring (1) as defined in claim 1, wherein the resin composition contains 5-25 vol% of polytetrafluoroethylene resin relative to the whole of the resin composition.

3. The piston ring (1) as defined in claim 1, wherein:
the carbon material includes at least the carbon fiber, and
the average fiber length (30, 150, 400) of the carbon fiber is 20-200 µm.

## Patentansprüche

1. Ein Kolbenring (1), der in einem zum Verdichten von Wasserstoffgas ausgebildeten Wasserstoffgas-Hubkolbenverdichter verwendet wird, wobei:
der Kolbenring (1) aus einer Harzzusammensetzung gebildet ist, die mindestens Polyetheretherketonharz als Hauptkomponente enthält;
die Harzzusammensetzung Kohlenstoffmaterial enthält, in dem der Gehalt eines Schwefelatoms 200 ppm oder weniger beträgt;
das Kohlenstoffmaterial mindestens eines von Kohlenstofffaser, Graphit und Kokspulver ist;
die Harzzusammensetzung insgesamt 5-35 Vol.-% des Kohlenstoffmaterials bezogen auf die gesamte Harzzusammensetzung enthält; wobei die Harzzusammensetzung kein Sulfid enthält und das Harz kein Schwefelatom in seiner Molekularstruktur enthält; wobei
der Kolbenring einen endothermen Peak aufgrund von Wärmehysterese in einem Bereich von 150-330 °C in einem Temperaturerhöhungsprozess der dynamischen Differenzkalorimetrie aufweist; und
wobei der Gehalt des Schwefelatoms im Kolbenring (1) 250 ppm oder weniger beträgt.

2. Der Kolbenring (1) nach Anspruch 1, wobei die Harzzusammensetzung 5-25 Vol.-% Polytetrafluorethylenharz bezogen auf die gesamte Harzzusammensetzung enthält.

3. Der Kolbenring (1) nach Anspruch 1, wobei:
das Kohlenstoffmaterial mindestens die Kohlenstofffaser umfasst, und
die durchschnittliche Faserlänge (30, 150, 400) der Kohlenstofffaser 20-200 µm beträgt.

## Revendications

1. Un segment de piston (1) utilisé dans un compresseur à piston alternatif pour gaz hydrogène configuré pour comprimer du gaz hydrogène, dans lequel :
le segment de piston (1) est formé d'une composition de résine contenant au moins une résine de polyétheréthercétone en tant que composant principal ;
la composition de résine contient un matériau carboné dans lequel la teneur en atome de soufre est de 200 ppm ou moins ;
le matériau carboné est au moins l'un parmi la fibre de carbone, le graphite et la poudre de coke ;
la composition de résine contient un total de 5 à 35 % en volume du matériau carboné par rapport à l'ensemble de la composition de résine ;
dans lequel la composition de résine ne contient pas de sulfure et la résine ne contient pas d'atome de soufre dans sa structure moléculaire ;
dans lequel le segment de piston présente un pic endothermique dû à une hystérésis thermique dans une plage de 150 à 330 °C dans un processus d'augmentation de température de la calorimétrie différentielle à balayage ; et
dans lequel la teneur en atome de soufre dans le segment de piston (1) est de 250 ppm ou moins.

2. Le segment de piston (1) selon la revendication 1, dans lequel la composition de résine contient 5 à 25 % en volume de résine de polytétrafluoroéthylène par rapport à l'ensemble de la composition de résine.

3. Le segment de piston (1) selon la revendication 1, dans lequel :
le matériau carboné inclut au moins la fibre de carbone, et
la longueur de fibre moyenne (30, 150, 400) de la fibre de carbone est de 20 à 200 um.
